(19) Europäisches Patentamt
European Patent Office
Office européen des brevets

(11) EP 1 920 655 B1

(12) **EUROPEAN PATENT SPECIFICATION**

(45) Date of publication and mention
of the grant of the patent:
**19.05.2010 Bulletin 2010/20**

(51) Int Cl.:
*A21B 3/04* *(2006.01)*     *F24C 15/00* *(2006.01)*

(21) Application number: **07118651.4**

(22) Date of filing: **17.10.2007**

(54) **Steaming oven**

Dampfofen

Four à vapeur

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **10.11.2006 IT PN20060090**

(43) Date of publication of application:
**14.05.2008 Bulletin 2008/20**

(73) Proprietor: **ELECTROLUX PROFESSIONAL S.p.A.**
**33170 Pordenone (IT)**

(72) Inventors:
• **Sinatra, Fabio**
**33052 Cervignano Del Friuli (Udine) (IT)**
• **Toppano, Michele**
**33036 Mereto Di Tomba (Udine) (IT)**
• **Moretto, Gianni**
**30027 S. Dona' Di Piave (Venezia) (IT)**

(74) Representative: **Markovina, Paolo et al**
**Electrolux Italia S.p.A.**
**Corso Lino Zanussi 30**
**33080 Porcia (PN) (IT)**

(56) References cited:
**EP-A1- 0 194 012     DE-U1-202004 020 375**
**JP-A- 60 188 752     JP-A- 2005 238 023**
**US-A- 5 530 223     US-A1- 2003 202 786**

• **COETZEE ET AL: "Scale reduction and scale modification effects induced by Zn and other metal species in physical water treatment" WATER SA, [Online] vol. 24, no. 1, January 1998 (1998-01), pages 77-84, XP002466508 ISSN 0378-4738 ISSN: 0378-4738 Retrieved from the Internet: URL:http://www.wrc.org.za/archives/ watersa %20archive/ 1998/January/jan98_p77.pdf> [retrieved on 2008-01-28]**

## Description

The present invention refers to an improved kind of food cooking oven, provided with improved means for delivering steam into the cooking cavity thereof.

Widely known in the art are currently food cooking ovens that are adapted to make use of a so-called "steaming" cooking mode aimed at ensuring a quicker and more even heat transfer to the food being cooked; such operating capability of these ovens and the related cooking mode and process are already largely known to all those skilled in the art, so that they do not need any further explanation and shall not be dealt with any further.

An oven of this kind is disclosed in DE 20 2004 020 375 U, which illustrates a cooker having an operating chamber, especially a cooking chamber, a fan chamber, a water boiler for a steam generator, an extinguishing box and/or a water flooding reservoir with at least one control element for the opening. The throughflow cross-section of the control element is adjustable so that the outer periphery of the throughflow cross-section can be expended to increase the throughflow rate and constricted to reduce the throughflow rate.

Suffice it to say, in this connection, that - to provide such operating mode and enable steam to be generated and injected into the cooking cavity to carry out the related cooking process - these ovens are provided with a small boiler that is in turn provided with a water inlet conduit, which is usually connected to the water supply line and carries water flowing in therefrom; said boiler is further provided with a delivery conduit, into which the steam generated in said boiler is channelled to be conveyed for delivery into the cooking cavity of the oven.

To the purpose of heating up the water contained in said boiler, use is generally made of heating means that are largely known as such in the art, such as a sheathed electric heating element submerged in the water inside the boiler, or a gas burner whose flue gases are conveyed through appropriate coiled or otherwise configured heat-exchange conduits that are anyway capable of ensuring a maximum of heat-exchange efficiency and capacity, wherein such heat-exchange conduits are again kept submerged in the water inside the boiler.

Widely known in the art is also the fact that the presence of high-temperature heating elements submerged in a bath of water flowing in from a water supply line for residential and similar uses gives almost unfailingly rise to a typical drawback, which is brought about by the fact that said water flowing in from the water supply main contains some compounds that are present in the water in the dissolved form thereof. In a most typical case, these compounds include calcium bicarbonate, which - owing to the effect of high temperature - converts into calcium carbonate, generally known as "limestone", giving rise to the undesired scaling effect.

In particular, calcium carbonate is usually referred to as limestone owing to its tending to settle, i.e. deposit on the surface of said heating elements, thereby giving rise to scale of an apparently calcareous kind forming thereupon. It is in fact known from experience that - after a more or less prolonged use thereof - such heating elements tend to become covered with a layer of a hard, whitish and uniform substance, i.e. limestone.

The presence of limestone gives in turn rise to the largely known effect of a drastic reduction in the heat-exchange capacity of the affected heating element, with a resulting loss in the efficiency of the latter. Moreover, it can be readily appreciated that the reduction in heat-exchange efficiency, i.e. in the rate at which heat is exchanged with and transferred to the water bath to be heated causes in turn the heating element to be subject to over-heating, under concrete risks - and related dangers - for it to melt down or burn out.

The problem of the limestone in a steam oven is for example expressed in US 5,530,223, which discloses a convection and steam oven for food with an oven chamber and an auxiliary chamber partitioned-off from this in which are arranged a motor-driven, radial-action fan and several heating elements surrounding the fan, with a pre-atomization element mounted on and rotating with the hub of the fan to which is optionally supplied water from a pipe. In order to maximize pre-atomization efficiency, the pre-atomization element is arranged as a separate body with a convex surface on the hub of the fan.

For such layer of limestone, i.e. scale formation to be removed, the need therefore arises for proper maintenance to be carried out regularly and periodically, which involves either opening up the boiler and removing the layer of limestone either by hand or with the aid of appropriate tools, or making use of special baths containing "softening" substances, i.e. substances adapted to chemically combine with calcium carbonate and remove it by causing it to dissolve in the same bath.

As this can be most readily appreciated, such maintenance tasks call for a certain amount of time to be spent at regular intervals, along with the availability of a certain technical skill required to appropriately carry them out.

In view of doing away with such maintenance chore, widely known in the art is also a practice consisting in solving the problem at the source, i.e. removing from the inflowing water the calcium bicarbonate dissolved therein, before the same water is eventually let into the boiler. Such solution can also be implemented by making use of other means adapted to intercept and retain said calcium bicarbonate dissolved in the water being supplied, such as for instance water softeners of the type generally intended for residential use, nano-filters, reverse-osmosis cells, demineralizers of the most varied kind and effectiveness.

Albeit generally accepted as being quite effective, these means do not however do away with, but tend to rather increase the effort required in terms of both work and costs to maintain the inner surfaces of the boiler and, above all, the heating element - irrespective of which kind of heating element is used, actually - in functionally acceptable conditions.

A partial solution to prevent limestone deposit in a heating element contained in a water heating chamber is known from US 2003/0202786, which discloses a water heater comprising a housing defining a water heating chamber, at least a portion of the housing being metallic, and a metallic heating element disposed in the housing for heating the water, wherein the metallic portion of the housing and a metallic heating element are electrically connected such that the metallic portion of the housing is cathodic and the metallic heating element is anodic and current flows from the metallic heating element, through the water, to the metallic portion of the housing. A system for treating water is also disclosed and comprises the water heater and a collector disposed in the housing for collecting solid precipitates deposited from the water. Methods for heating and treated water are also disclosed.

Known from the disclosure in the Japanese patent publication no. JP2005238023 is a kind of device aimed at preventing limestone deposits, i.e. scale from forming along a conduit through which there flows a stream of water; the therein proposed solution, however, turns out as not being generally practicable owing to the paucity of zinc ions released because of the fact that the two electrodes are situated on the opposite walls of said conduit and the mass of particles containing zinc to be eluted is situated between such electrodes and does not form one of said electrodes itself.

Furthermore, such solution is not easily practicable, either, owing to the fact that, for the zinc-containing particles to be replaced, the need arises for the conduit to be anyway emptied and a portion of the wall thereof to be opened.

Japanese patent application n.JP 60188752 discloses a boiler provided with a heat exchanger, which inner walls are covered by a polyamide-containing plastic preventing the adhesion of contaminating constituents, such as scale of hot-water, various kinds of secretions of body, impurity and the like, which are proper for the bath boiler.

It would therefore be desirable, and it is a main object of the present invention, actually, to provide a kind of food cooking oven, provided with a boiler for the generation of steam and the conveyance thereof into the cooking cavity of the oven, as well as with related heating means and a conduit for letting in water, generally from the water supply main, wherein said oven is also arranged and adapted to neutralize the effect of the presence of calcium bicarbonate in the water being let in and the conversion thereof into limestone depositing onto the walls of the boiler and, above all, the surfaces of the heating elements used.

According to the present invention, this aim is reached a kind of food cooking oven incorporating the features as defined and recited in the appended claims.

Features and advantages of the present invention will anyway be more readily understood from the description that is given below by way of non-limiting example with reference to the accompanying drawings, in which:

- Figure 1 is a schematic view of the water supply circuit for letting water into a boiler, according to a second embodiment of the present invention;

- Figure 2 is a different symbolical representation of the circuit shown in Figure 1, when installed in a food cooking oven;

- Figure 3 is an enlarged and median cross-sectional view of the basic component part of the invention.

The present invention is substantially based on the feature consisting in providing an electrolytic cell adapted to elute a small, but anyway sufficient and adequate flow of zinc ions that are then carried into the steam generating boiler.

The property that enables zinc to reduce the production of calcium carbonate is already known in the art. In this connection, there may be cited as an example the publication ISSN 0378-4738 Water SA Vol. 24 No. 1 January 1998, which - on page 7 et seq. - discloses an article titled "SCALE REDUCTION AND SCALE MODIFICATION EFFECTS INDUCED BY ZN AND OTHER METAL SPECIES IN PHYSICAL WATER TREATMENT".

In such article, the Authors also state as follows:

*"We have shown that the trace amounts of Zn in particular can slow down the rate of nucleation of calcium carbonate and also promote its crystallization in the aragonite, rather than the calcite form, even under conditions where calcite would be the preferred crystal form."*

In addition, the above-noted article explains in quite exhaustive a manner this particular capacity of zinc ions, along with the related quantitative values in precisely affecting nucleation of calcium carbonate.

To put it in a few words, it has been scientifically demonstrated that the presence of zinc ions in a sufficient percentage is effective in modifying the crystalline structure of the limestone by weakening the bond thereof with the hot surface, onto which it deposits, and ultimately improves its aptitude to being removed.

No specific use of such property appears however to be known in applications involving the modification of the properties of water contained in steam generation boilers of food cooking ovens in view of reducing limestone production and scale formation.

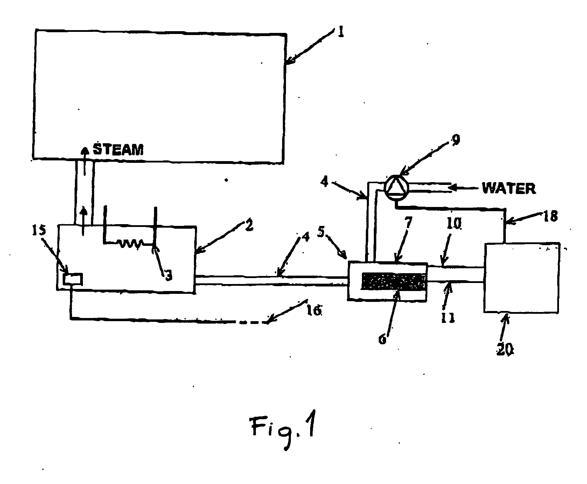

With reference to Figure 1, a food cooking oven according to the prior art, as particularly intended for use in commercial and mass-catering foodservice applications, is provided with a cooking cavity 1, a boiler 2 containing a mass of water and provided with heating means 3 adapted to heat up such water in view of generating a flow of steam to be delivered into said cooking cavity, a water supply conduit 4 adapted to let a stream of water into said boiler for it to be heated up.

According to the present invention, said food cooking oven is further provided with an electrolytic cell 5, of which an electrode 6 is constituted by a mass of zinc, or zinc alloy, in compact form, i.e. not in the form of loose particles.

Such electrolytic cell is provided with power-supply connections 10, 11 for the energization of the related electrodes 6 and 7, and is further filled with a bath of water, preferably flowing in directly from the water supply main.

After said electrolytic cell 5 is allowed to operate for a pre-established period of time, during which the anode 6 is eluted in the water contained in said cell, the concentration of zinc ions in the same cell is able to reach a pre-established useful value, such that - if said water is then poured into said boiler, e.g. via a conduit 14 - the zinc ions contained therein will be effective in slowing down scale formation on the wet walls of said heating means 3 and said boiler 2 to a significant extent.

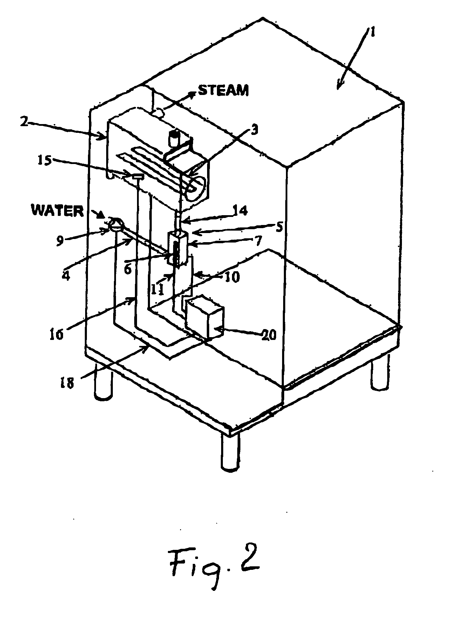

This solution, as synthetically described above in the main working principle thereof, may be advantageously applied to the kind of oven being considered - as illustrated in Figures 1 and 2 - by simply placing the same cell in series to said water supply conduit 4 letting water into the boiler 2, so that the whole amount of water due to flow into and fill the boiler is caused to first flow through said cell for it to be treated and enriched with the zinc ions produced by the cell itself.

Such water supply conduit 4 shall of course be conventionally provided with a water inlet valve 9 in such manner that said valve 9 is able to automatically control also the flow rate of the water that is allowed to flow through the electrolytic cell 5 to be enriched with the zinc ions produced therein.

For the desired concentration of zinc to be obtained in the boiler 2, the need therefore arises for the minimum amount of zinc that must be eluted in the water flowing through the cell to be correctly identified.

To this purpose, following logical steps shall be performed along with the related calculations:

1) based on the desired value of zinc concentration in the water filled in the boiler, as well as on the characteristics of the water being used (which are known separately since measured in advance), the amount of zinc, in the state of ions, that must be eluted in the water to be let into the boiler is calculated;

2) based on the output rate of the boiler, i.e. the amount of steam being produced by the boiler in a given unit of time (which is again a known value), the amount of zinc that must be eluted by the electrolytic cell in the same unit of time is calculated;

3) once the amount of zinc to be produced in the water bath is in this way known, the same amount of zinc is eluted by properly controlling the intensity of the current being delivered to the cell.

Reference is in fact made to following formula, which on the other hand is largely known as such in the art:

$$m_z = (I_z \cdot t \cdot p) / (F \cdot n)$$

wherein:

$m_z$    is the mass, in grams, of the zinc to be eluted,
$I_z$    is the current to be sent into the cell,
$t$    is the transit time of the current,
$p$    is the molecular weight of the zinc, i.e. 65.38,
$F$    is the Faraday constant, i.e. $F = 96485.3$
$n =$    2, i.e. the number of electrons taking part in the reaction.

When the above relation is transformed and the current is set as the variable, the result is as follows:

$$I_z = F \cdot n \cdot p \, (m_z/t)$$

wherein $(m_z/t)$ is however a value that is proportional to the flow rate, generally known as such.

As a result, the optimum value of the current to apply to the cell in view of obtaining a desired constant concentration in the water contained in the boiler can be correctly and easily found.

It can in addition be appreciated that this mode of operation for producing a controlled amount of zinc ions cannot do away with the basic fact that the cell itself shall be current-controlled, and not voltage-controlled.

Accordingly, for the desired concentration of zinc ions in the water of the boiler to be ensured, all it takes is to provide a proper cell along with an appropriate current control device.

An improvement to the above described embodiment, introducing an advantageous variation thereof, is based on the fact that, for any reason whatsoever, it may be desirable to control the operation of the electrolytic cell 5 not in a continuous manner, so as to produce an amount of zinc ions that is substantially proportional to the amount of water flowing therethrough (in view of maintaining the zinc concentration constant), but in a differently controlled manner. For instance, such need may arise during the initial boiler filling phases, in which it may prove useful for the cell to be operated with a higher current for a certain initial period, to be then returned to a regular, steady-state operation afterwards.

Or, considering that during the evaporation process of the water contained in the boiler, the zinc eluted therein is not removed in the same percentage as the water containing it, but is rather removed in a lower percentage, it may be found to be appropriate for the elution of zinc in the cell to be reduced so as to maintain the zinc concentration substantially constant in relation to the amount of limestone, i.e. calcium carbonate.

Accordingly, it may be found to be appropriate for said oven, and in particular said cell, to be provided with proper sensor means 15 and related processing devices associated thereto, which are adapted to:

- detect in a substantially continuous manner, and in real time, the concentration of zinc in the water of the boiler,

- process the related information,

- send a corresponding signal to the associated control means 20, so that these are able to supply current to the cell in such manner as to allow the zinc concentration in the water of the boiler to be kept at a desired, substantially constant value.

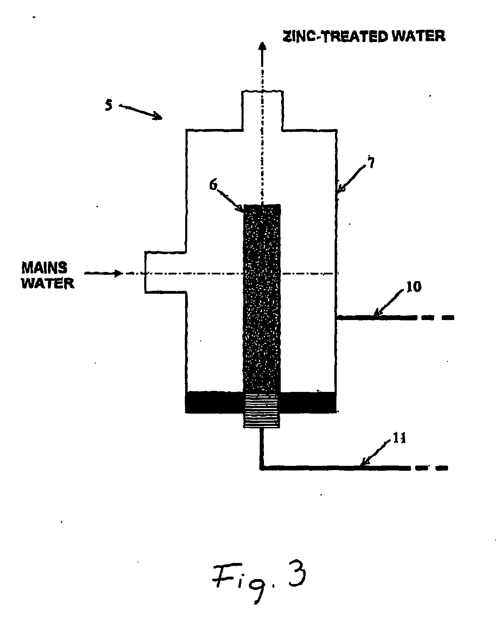

With reference to Figure 3. in view of simplifying the construction thereof, said electrolytic cell 5 is made up by an outer casing 7 made of a noble metal having a lower potential, which forms the cathode thereof, and a rod 6 of zinc - or, anyway, a zinc-containing alloy - that is introduced in said cell where it forms the second electrode, i.e. the anode.

In this way, both the operation of the cell, which does not interfere with the flow of water delivered into the boiler, but is anyway capable of completely treating said flow, and the replacement of the zinc rod, owing to its being capable of being simply removed from the outside, preferably with the use of appropriate fastening means and sealing gaskets (not shown in the Figures, since widely known as such in the art), become very simple and easy done.

Moreover, the power-supply connections 10 and 11 of said cell 5 are in turn connected to control means 20 used as the actual control unit of the whole oven; in particular, these control means - generally known as such in the art - can be advantageously provided in such manner as to enable said cell to be solely supplied, i.e. energized when the water inlet valve 9 is opened, so as to ensure that the cell operates only when water is being filled into the boiler, actually.

Alternatively, it may be contemplated that said cell 6 is only able to operate upon receiving a specific input, i.e. actuation signal, so that the same cell is positively prevented from operating when the oven is going through certain operation phases thereof or is used to perform certain processes, during which an operation of the cell is not needed or required, actually, or is even undesired, e.g. when very "soft" water is being supplied or certain maintenance operations are being carried out.

Since operating modes of this kind are easily implemented by anyone skilled in the art, once the associations between each and any cooking process and the corresponding steam generation cycle have been duly defined, the above improved embodiment shall not be explained here any further.

In the course of extensive and exhaustive experiments done in this connection, it has also been found that an optimum value of the concentration of zinc ions in the water of the boiler in relation to the amount of limestone, i.e. calcium carbonate in the same water, i.e. the Zn to Ca weight ratio, shall be - even slightly - higher than:

$$>>> 0.66 \cdot 10^{-3} <<<$$

In fact, such value of the zinc concentration in the water of the boiler has proven effective in sensibly favouring the formation of aragonite, which is largely known to be able to be eliminated in a much easier and simpler manner than limestone itself.

Finally, a further useful improvement consists in using a substantially plastic, and anyway not metal, substance to provide a coating on the inner surface of said boiler.

Since the walls of the boiler tank do in no case reach any excessively high temperature, owing to them being heated up by the water bath that is of course able to just reach up to a temperature of 100°C max., it is possible for the above-mentioned coating to be provided with the use of such appropriate plastic substances and such adequate coating techniques as they are readily available in the art.

In particular, a plastic substance that can be advantageously and preferably used in this connection is a plastic material - largely known on the market under the trade-name RILSAN™ and available from the ARKENSOL company - that has in fact proven to be particularly effective and good-value in view of reaching the desired purpose.

Generally speaking, however, all polyamide-type plastic materials known as PA6, PA11, PA12, PA46, PA66 are practically adequate and suitable for coating inner boiler walls and surfaces and reducing sensitiveness to scale formation.

This improvement appears to be particularly effective and advantageous, since the combined effect of eluting zinc ions in the boiler water and coating the inner boiler surfaces with suitable plastics drastically reduces the amount of limestone depositing onto the boiler walls and scale formation thereupon.

**Claims**

1. Food cooking oven, in particular for use in commercial and mass-catering foodservice applications, provided with a cooking cavity (1), a boiler (2) containing a mass of water and provided with heating means (3) adapted to heat up such water for generating a flow of steam to be delivered into said cooking cavity, a supply conduit (4) for letting a stream of water to be heated into the boiler, **characterised in that** the oven further comprises an electrolytic cell (5) adapted to produce zinc ions (Z++) that are eluted and dispersed in the water contained in said electrolytic cell (5), said water being then poured into said boiler (2), a valve (9) being provided upstream to said supply conduit (4), adapted to shut off said stream of water, whereby the electrodes (8, 7) of said electrolytic cell (5) are electrically connected to control means that are also adapted to control the operation of said valve (9) and said heating means (3) provided to heat up the water contained in said boiler

2. Food cooking oven according to claim 1, **characterized in that** said electrolytic cell (5) is connected in series to said supply conduit and is capable of enabling said stream of water from said supply conduit to flow therethrough.

3. Food cooking oven according to claim 2 **characterized in that** said electrolytic cell (5) is provided downstream from said valve (9) and upstream to said boiler.

4. Food cooking oven according to claim 3, **characterized in that** said electrolytic cell (5) is substantially comprised of an outer metal casing (7) featuring a sealed construction, and forming the cathode, and an anode of zinc (6) located inside said outer casing.

5. Food cooking oven according to one or more of the preceding claims, **characterized in that** said control means are adapted to control the operation of said electrolytic cell in a manner that is independent of the operation of said valve (9) and said water heating means (3).

6. Food cooking oven according to claim 5, **characterized in that** said boiler comprises sensor means (15) and processing devices adapted to determine the Zn-to-Ca weight ratio of the zinc and calcium present in the water contained therein, and **in that** said control means are adapted to control the operation of said cell depending on said ratio.

7. Food cooking oven according to one or more of the preceding claims **characterized in that** said control means are adapted to control the operation of said electrolytic cell (5) in a current-controlled mode.

8. Food cooking oven according to claim 6, **character-**

**ized in that** the value of the Zn-to-Ca weight ratio of zinc to calcium in the water in the boiler (2) must be higher than or equal to $0.66 \cdot 10^{-3}$.

**Patentansprüche**

1. Ofen zum Kochen von Nahrungsmitteln, insbesondere für kommerzielle Lebensmittelservice- und Massenverpflegungs-Anwendungen, ausgerüstet mit einem Kochraum (1); einem Boiler (2), der eine Masse an Wasser enthält und mit einem Heizmittel (3) versehen ist, welches geeignet ist, das Wasser aufzuheizen, um einen in den Kochraum zu liefernden Dampfstrom zu erzeugen; eine Versorgungsleitung (4) für die Zuführung eines zu erhitzenden Wasserstroms in den Boiler; **dadurch gekennzeichnet, dass** der Ofen ferner eine elektrolytische Zelle (5) umfasst, die geeignet ist, Zinkionen (Z++) zu produzieren, die eluiert und in dem in der elektrolytischen Zelle (5) enthaltenen Wasser verteilt werden, wobei das Wasser sodann in den Boiler (2) geführt wird; ferner ein Ventil (9), das stromaufwärts zur Versorgungsleitung (4) vorgesehen ist und geeignet ist, den Wasserstrom abzusperren, wobei die Elektroden (6, 7) der elektrolytischen Zelle (5) elektrisch an ein Steuermittel angeschlossen sind, das auch geeignet ist, die Betätigung des Ventils (9) und des Heizmittels (3) zu steuern, das zur Erhitzung des im Boiler enthaltenen Wassers vorgesehen ist.

2. Ofen zum Kochen von Nahrungsmitteln gemäß Anspruch 1, **dadurch gekennzeichnet, dass** die elektrolytische Zelle (5) in Serie mit der Versorgungsleitung verbunden ist und geeignet ist, dem Wasserstrom von der Versorgungsleitung das Durchströmen durch dieselbe zu ermöglichen.

3. Ofen zum Kochen von Nahrungsmitteln gemäß Anspruch 2, **dadurch gekennzeichnet, dass** die elektrolytische Zelle (5) stromabwärts von dem Ventil (9) und stromaufwärts zu dem Boiler vorgesehen ist.

4. Ofen zum Kochen von Nahrungsmitteln gemäß Anspruch 3, **dadurch gekennzeichnet, dass** die elektrolytische Zelle (5) im wesentlichen ein äußeres Metallgehäuse (7) als abgedichtete Konstruktion, das die Kathode bildet, und eine Anode aus Zink (6) umfasst, die innerhalb des äußeren Gehäuses angeordnet ist.

5. Ofen zum Kochen von Nahrungsmitteln gemäß einem der vorangehenden Ansprüche, **dadurch gekennzeichnet, dass** das Steuermittel geeignet ist, den Betrieb der elektrolytischen Zelle auf eine Weise zu steuern, die unabhängig von der Betätigung des Ventils (9) und des Wasserheizmittels (3) ist.

**6.** Ofen zum Kochen von Nahrungsmitteln gemäß Anspruch 5, **dadurch gekennzeichnet, dass** der Boiler ein Sensormittel (15) und Verarbeitungsmittel umfasst, die geeignet sind, das Zn-Ca-Gewichtsverhältnis des Zinks und Calciums in dem darin enthaltenen Wasser zu bestimmen, und dass das Steuermittel geeignet ist, den Betrieb der Zelle in Abhängigkeit von diesem Verhältnis zu steuern.

**7.** Ofen zum Kochen von Nahrungsmitteln gemäß einem oder mehreren der vorangehenden Ansprüche, **dadurch gekennzeichnet, dass** das Steuermittel geeignet ist, den Betrieb der elektrolytischen Zelle (5) auf Strom-kontrollierte Weise zu steuern.

**8.** Ofen zum Kochen von Nahrungsmitteln gemäß Anspruch 6, **dadurch gekennzeichnet, dass** der Wert des Zn-Ca-Gewichtsverhältnisses des Zinks und Calciums im Wasser des Boilers (2) größer oder gleich 0,66 x 10$^{-3}$ sein muss.

**Revendications**

**1.** Four à cuisson d'aliment, en particulier pour un usage dans des applications commerciales et de services de restauration de masse, pourvu d'une cavité de cuisson (1), d'une chaudière (2) contenant une masse d'eau et pourvue d'un moyen de chauffage (3) apte à chauffer une telle eau pour générer un flux de vapeur à fournir dans la cavité de cuisson, d'un conduit d'alimentation (4) pour faire en sorte qu'un courant d'eau soit chauffé dans la chaudière, **caractérisé en ce que** le four comprend en outre une cellule d'électrolyse (5) apte à produire des ions de zinc (Z++) qui sont diffusés et dispersés dans l'eau contenue dans ladite cellule d'électrolyse (5), ladite eau étant ensuite versée dans ladite chaudière (2), une vanne (9) étant fournie en amont dudit conduit d'alimentation (4), apte à couper ledit courant d'eau, de telle manière que les électrodes (6, 7) de ladite cellule d'électrolyse (5) soient électriquement connectées à un moyen de commande qui est également apte à commander le fonctionnement de ladite vanne (9) et dudit moyen de chauffage (3) fourni pour chauffer l'eau contenue dans ladite chaudière.

**2.** Four à cuisson d'aliment selon la revendication 1, **caractérisé en ce que** ladite cellule d'électrolyse (5) est connectée en série au dit conduit d'alimentation et est capable de permettre au dit courant d'eau provenant dudit conduit d'alimentation de s'écouler à travers celle-ci.

**3.** Four à cuisson d'aliment selon la revendication 2, **caractérisé en ce que** ladite cellule d'électrolyse (5) est fournie en aval de ladite vanne (9) et en amont de ladite chaudière.

**4.** Four à cuisson d'aliment selon la revendication 3, **caractérisé en ce que** ladite cellule d'électrolyse (5) se compose sensiblement d'un carter métallique extérieur (7) d'une construction étanche, et formant la cathode, et d'une anode de zinc (6) située à l'intérieur dudit carter extérieur.

**5.** Four à cuisson d'aliment selon l'une quelconque des revendications précédentes, **caractérisé en ce que** ledit moyen de commande est apte à commander le fonctionnement de ladite cellule d'électrolyse d'une manière qui est indépendante du fonctionnement de ladite vanne (9) et dudit moyen de chauffage d'eau (3).

**6.** Four à cuisson d'aliment selon la revendication 5, **caractérisé en ce que** ladite chaudière comprend un moyen de capteur (15) et des dispositifs de traitement aptes à déterminer le rapport de poids de Zn sur Ca du zinc et du calcium présents dans l'eau contenue à l'intérieur de celle-ci, et **en ce que** ledit moyen de commande est apte à commander le fonctionnement de ladite cellule en fonction dudit rapport.

**7.** Four à cuisson d'aliment selon l'une quelconque des revendications précédentes, **caractérisé en ce que** ledit moyen de commande est apte à commander le fonctionnement de ladite cellule d'électrolyse (5) dans un mode de commande par courant.

**8.** Four à cuisson d'aliment selon la revendication 6, **caractérisé en ce que** la valeur du rapport de poids Zn/Ca du zinc sur le calcium dans l'eau dans la chaudière (2) doit être supérieure ou égale à 0,66.10$^{-3}$.

Fig.1

STEAM

WATER

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 202004020375 U
- US 5530223 A
- US 20030202786 A
- JP 2005238023 B
- JP 60188752 B